Europäisches Patentamt

European Patent Office

Office européen des brevets

(19)

(11) Numéro de publication: **0 253 038**
**A1**

(12) **DEMANDE DE BREVET EUROPEEN**

(21) Numéro de dépôt: **86420193.4**

(22) Date de dépôt: **17.07.86**

(51) Int. Cl.⁴: **B65D 65/16 , G06K 19/00**

(43) Date de publication de la demande:
**20.01.88 Bulletin 88/03**

(84) Etats contractants désignés:
**BE DE FR GB IT LU NL**

(71) Demandeur: **BLACHON & CIE**
**Rue Traversière**
**F-43220 Dunières(FR)**

(72) Inventeur: **Blachon, Georges**
**Rue Traversières**
**F-43220 Dunières(FR)**

(74) Mandataire: **Maisonnier, Jean**
**Bureau Maisonnier 28 Rue Servient**
**F-69003 Lyon(FR)**

(54) **Procédé et dispositif pour brouiller à travers un emballage transparent ou translucide, la lecture de mentions symbolisées par un code à barres.**

(57) L'invention concerne un film souple transparent (1) pour emballer des produits unitaires.

Sur le film (1) sont prévus des obstacles (9) à travers lesquels le rayon d'un capteur de lecture perd son pouvoir discriminateur . Il ne peut donc plus lire les étiquettes unitaires (5) codées selon un code à barres . Il ne peut lire que l'étiquette globale extérieure (7).

Application : présentation à la vente en grandes surfaces , d'un lot (8) de plusieurs produits unitaires (2).

Fig 3

EP 0 253 038 A1

## " PROCEDE ET DISPOSITIF POUR BROUILLER A TRAVERS UN EMBALLAGE TRANSPARENT OU TRANSLUCIDE , LA LECTURE DE MENTIONS SYMBOLISEES PAR UN CODE A BARRES "

La présente invention est relative à un procédé et à son dispositif de mise en oeuvre , pour brouiller la lecture à travers un emballage transparent , de mentions symbolisées par un code à barres.

On sait que ce problème de brouillage présente un intérêt , notamment dans les magasins à grande surface ou dans les commerces de distribution , où se généralise l'étiquetage des produits avec des indications codées. Lorsque le client arrive à la caisse , la caissière utilise un appareil lecteur automatique , qui lit les mentions portées par l'étiquette . Ces mentions sont codées suivant un code à barres d'un type en lui-même connu , et elles concernent aussi bien le prix du produit que son poids , ou toutes autres indications relatives à sa nature ou à la gestion des stocks du magasin , ou encore à l'origine du produit , ou à son fournisseur.

La demande de Brevet Européen 85 420182.9 , déposée le 17 octobre 1985, au nom de la Présente Demanderesse , sous le titre " Procédé et dispositif pour brouiller à travers un emballage transparent , la lecture de mentions symbolisées par un code à barres " propose de résoudre le problème en imprimant sur le film transparent d'un emballage , un réseau de lignes sinueuses ou brisées , parallèles entre elles .

La Présente Invention a pour but de proposer une solution plus générale , susceptible de donner satisfaction dans tous les cas , quels que puissent être le code à barres utilisé , ou le type du lecteur automatique correspondant , et , ceci , que le film d'emballage soit transparent , ou simplement translucide.

Le procédé selon l'invention , pour empêcher à travers un film d'emballage souple translucide ou transparent , la lecture de mentions codées selon un code à barres, est caractérisé en ce qu'on prévoit d'incorporer au film au moins un obstacle susceptible de détruire le pouvoir discriminateur d'un appareil lecteur de type connu dont le rayon de lecture est dirigé sur le film pour tenter de lire à travers lui , les mentions codées précitées.

Suivant une autre caractéristique de l'invention ,l'obstacle est constitué par des motifs imprimés sur le film , pour constituer un obstacle opaque , arrêtant au moins en partie , le passage du rayon de lecture.

Suivant une autre caractéristique de l'invention , l'obstacle est constitué par des motifs imprimés sur le film pour prêter à confusion avec les mentions codées dont le contraste est ainsi réduit au-dessous du seuil de discrimination de l'appareil de lecture.

Suivant une autre caractéristique de l'invention ,l'obstacle est constitué par incorporation au film, d'un produit composé qui arrête les rayons lumineux d'une longueur d'onde inférieure à 0,65 micron , comme par exemple, des oxydes métalliques tels que l'oxyde de zinc , l'oxyde de fer , ou l'oxyde de titane, ou autres mélanges-maîtres.

Suivant une autre caractéristique de l'invention , le mélange - maître est déposé en couche continue sur l'une au moins des faces du film,sur tout ou partie de sa surface.

Suivant une autre caractéristique de l'invention , le mélange - maître est incorporé à la masse constitutive du film , dès la fabrication de celui-ci.

Suivant une autre caractéristique de l'invention , les motifs imprimés sur le film forment une trame constituée par des points de différentes grosseurs et d'espacements variables , ces points pouvant avoir des formes différentes.

Suivant une autre caractéristique de l'invention ,les motifs imprimés ont une couleur susceptible d'être mal discernée par le rayon du lecteur , par rapport à la couleur des barres codées dont on se propose d'empêcher la lecture.

Le dessin annexé , donné à titre d'exemple non limitatif , permettra de mieux comprendre l'invention , et les avantages qu'elle est susceptible de procurer.

La figure 1 montre un film d'emballage selon l'invention., sur lequel est imprimée une trame de points ayant des formes , des écartements et des dimensions variées.

La figure 2 montre un film sur l'une des faces duquel est disposée une couche écran continue.

La figure 3 illustre un lot de quatre produits unitaires emballés dans un sachet constitué à partir d'un film selon l'invention.

L'invention concerne un film ou gaine souple , transparent ou translucide 1 , destiné à regrouper des produits unitaires 2 autour desquels il constitue un emballage 8 .

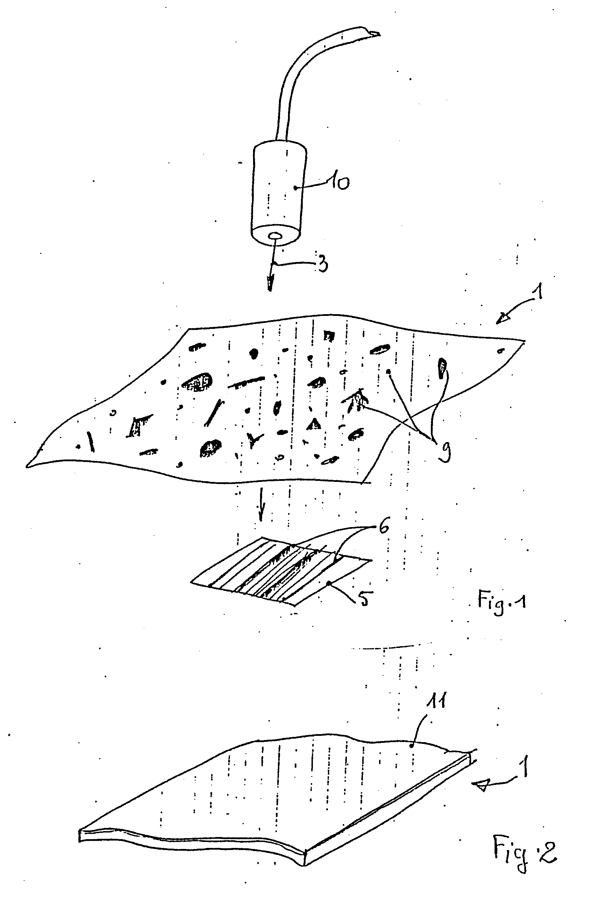

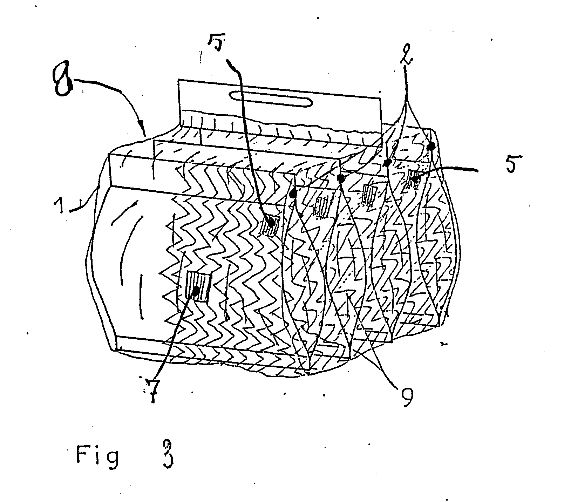

Le film d'emballage 1 est :
-soit imprimé ( figure 1) ;
-soit équipé , par incorporation , dépose , couchage co-extrusion , d'un produit colorant , formant obstacle au rayon lecteur 3 d'un appareil 4 de type connu , pour lire une étiquette 5 portant des mentions 6 , codées suivant un code à barres .L'étiquette 5 peut être rapportée ou imprimée.

Chacune des étiquettes unitaires codées 5 devient illisible à travers l'emballage 8 ; seule , reste visible la symbolisation globale du lot ,matérialisée , par exemple , par une étiquette extérieure 7 .

La constitution du film 1 est la suivante :

Sur une partie au moins de la surface du film de support 1 , est imprimée une trame , qui peut être composée de points 9 de différentes grosseurs , et d'espacements variables , ces points pouvant avoir des formes différentes.

On peut imprimer tous autres dessins ayant pour but de masquer , au moins partiellement , les symbolisations 6 , pour en empêcher la lecture , tout en laissant , visibles à l'oeil nu , ces symbolisations , pourvu que le rayon 3 de l'appareil lecteur 10 rencontre , sur sa trajectoire , au moins un obstacle (placé sur les barres 6 , ou dans les intervalles ) qui oblitère , donc rende impossible ,la lecture de la symbolisation .

Les motifs imprimés en continu , ou repérés , sont apposés sur des gaines ou films souples 1 , par exemple des polyoléfines.

L'impression peut être réalisée sur les faces intérieure ou extérieure , ou encore entre différentes couches de gaines ou films.

Un résultat similaire peut être obtenu en incorporant dans la masse du film 1 , un produit colorant arrêtant les rayons de longueur d'onde inférieurs à 0,65 mi cron ,, comme par exemple , des oxydes métalliques tels que: l'oxyde de zinc , l'oxyde de fer , ou l'oxyde de titane.

Le produit oblitérant peut être déposé en une couche continue 11 , sur tout , ou partie , de la surface du film 1 .

De plus , le film 1 peut être revêtu d'un code global , où l'étiquette 7 serait remplacée par une mention directement imprimée.

## Revendications

1 - Procédé pour empêcher , à travers un film d'emballage (1) souple , translucide ou transparent , la lecture de mentions (6) , codées selon un code à barres , caractérisé en ce qu'on prévoit d'incorporer au film (1) au moins un obstacle susceptible de détruire le pouvoir discriminateur d'un appareil lecteur (10) de type connu dont le rayon de lecture (3) est dirigé sur le film (1) pour tenter de lire à travers lui ,les mentions codées (6).

2 - Dispositif pour la mise en oeuvre du procédé suivant la revendication 1 , caractérisé en ce que l'obstacle est constitué par des motifs imprimés sur le film,pour constituer une zone opaque , arrêtant au moins en partie , le passage du rayon de lecture (3).

3 - Dispositif pour la mise en oeuvre du procédé suivant la revendication 1 , caractérisé en ce que l'obstacle est constitué par des motifs imprimés sur le film pour prêter à confusion avec les mentions codées (6) dont le contraste est ainsi réduit au-dessous du seuil de discrimination de l'appareil de lecture (10).

4 - Dispositif pour la mise en oeuvre du procédé suivant la revendication 1 , caractérisé en ce que l'obstacle est constitué par incorporation au film (1) , d'un mélange-maître qui arrête les rayons lumineux d'une longueur d'onde inférieure à 0,65 micron , ce produit appartenant au même groupe d'oxydes métalliques que l'oxyde de zinc , l'oxyde de fer , et l'oxyde de titane.

5 - Dispositif suivant la revendication 4 , caractérisé en ce que le mélange-maître est déposé en une couche continue (11) sur l'une au moins des faces du film.

6 - Dispositif suivant là revendication 4 , caractérisé en ce que le mélange-maître est incorporé à la masse constitutive du film (1) dès la fabrication de celui-ci.

7 - Dispositif suivant l'une quelconque des revendications 2 à 4 , caractérisé en ce que les motifs imprimés sur le film (1) forment une trame constituée par des points

8 - Dispositif suivant la revendication 7 , caractérisé en ce que les points (9) sont de différentes gros seurs et d'espacements variables.

9 - Dispositif suivant la revendication 7 , caractérisé en ce que les points (9) ont des formes différentes.

10 - Dispositif suivant la revendication 7, caractérisé en ce que les points sont tous de mêmes formes , dimensions et écartement , si bien qu'ils forment une trame régulière.

11 - Dispositif suivant la revendication 3, caractérisé en ce que les motifs imprimés ont une couleur susceptible d'être mal discernée par le rayon (3) du lecteur (10) par rapport à la couleur des barres codées (6) dont on se propose d'empêcher la lecture.

12 - Dispositif pour la mise en oeuvre du procédé suivant la revendication 1 , caractérisé en ce que l'obstacle est constitué par incorporation au film (1) d'un colorant qui arrête les rayons lumineux d'une longueur d'onde inférieure à 0,65 micron , ce produit appartenant au même groupe d'oxydes métalliques que l'oxyde de zinc ,l'oxyde de fer , et l'oxyde de titane.

10

3

1

9

6

5

Fig. 1

11

1

Fig. 2

0 253 038

Fig 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 020 605 (FUJI)<br><br>* Figures 1-3; page 6, avant-dernier alinéa - page 7; page 12, alinéa 2; page 5, alinéa 2 *<br><br>--- | 1,2,4 6 | B 65 D 65/16<br>G 06 K 19/00 |
| A | US-A-4 255 653 (U.S.A.)<br>* Figures 1-7; colonne 3, ligne 26 - colonne 6, ligne 19 *<br><br>----- | 1,2 | |

**DOMAINES TECHNIQUES RECHERCHES (Int. Cl.4)**

B 65 D
G 06 K

Le présent rapport de recherche a été établi pour toutes les revendications

| Lieu de la recherche | Date d'achèvement de la recherche | Examinateur |
|---|---|---|
| LA HAYE | 20-01-1987 | FORLEN G.A. |